# EUROPÄISCHE PATENTSCHRIFT

(11) **EP 3 116 746 B1**
(45) Veröffentlichungstag und Bekanntmachung des Hinweises auf die Patenterteilung: **12.12.2018**
(21) Anmeldenummer: 15712825.7
(22) Anmeldetag: 13.03.2015
(51) Int. Cl.: B60N 2/24, B60N 2/42, B60N 2/427, F16F 9/53, F16F 15/00

(54) **VERFAHREN UND BELADUNGSEINHEIT ZUM DÄMPFEN VON IM ÜBERLASTFALL EINWIRKENDEN BELASTUNGEN**
METHOD AND LOADING UNIT FOR DAMPING LOADS WHICH ACT IN THE CASE OF OVERLOAD
PROCÉDÉ ET UNITÉ DE CHARGEMENT DESTINÉS À L'AMORTISSEMENT DE CONTRAINTES EXERCÉES EN CAS DE SURCHARGE

(30) Priorität: 13.03.2014 DE 102014103463
(43) Veröffentlichungstag der Anmeldung: 18.01.2017
(73) Patentinhaber: General Dynamics European Land Systems - Mowag GmbH, 8280 Kreuzlingen (CH)
(72) Erfinder: BATTLOGG, Stefan, A-6771 St. Anton i.M. (AT); MAYER, Markus, A-6832 Sulz (Vorarlberg) (AT)
(74) Vertreter: BSB Patentanwälte Schütte & Engelen Partnerschaft mbB
(86) Internationale Anmeldenummer: PCT/EP2015/055375
(87) Internationale Veröffentlichungsnummer: WO 2015/136111

(56) Entgegenhaltungen:
- WO-A1-2011/141164
- US-A1- 2008 156 602
- US-A1- 2010 230 989

## Beschreibung

Die vorliegende Erfindung betrifft ein Verfahren zur Energieabsorption bzw. zur Dissipation von Energie zum Dämpfen von insbesondere auf eine Beladungseinheit zum Transport von Objekten bei einem einmaligen Überlastereignis einwirkenden Belastungen zum Schutz der transportierten Objekte, wie Personen oder Gegenständen, vor Schäden. Ein solches einmaliges Überlastereignis mit einem Energieeintrag tritt bei einer Explosion einer Mine auf.

Es sind unterschiedliche Verfahren zur Energieabsorption zur Reduktion von Belastungen bei Überlastfällen, wie z. B. und insbesondere bei Explosionen unterhalb von gepanzerten Fahrzeugen, bekannt geworden, um die transportierten Objekte und insbesondere Personen und empfindliche Geräte zu schützen. Zum Schutz werden typischerweise mechanische Systeme eingesetzt, bei denen durch ein Umformen oder Aufreißen Energie absorbiert wird, um bei einem Überlastereignis Energie zu absorbieren und die Insassen entsprechend zu schützen. Ein Systeme zur Energieabsorption bei Explosionen offenbart unter anderem die US 2008/156602 A1.

Nachteilig daran ist allerdings, dass bei derartigen Systemen eine Steuerung der Energieabsorption bei einem Überlastereignis mit unbekannter Impulsstärke und unbekanntem Impulsverlauf nicht möglich ist. Die Impulsstärke und die Impulsdauer von Minenexplosionen sind nicht vor der Explosion vorhersehbar, da die Art und Stärke der Mine, der Ort, die genaue Lage, die Tiefe im Boden und das die Mine umgebende Material bei einem realen Überlastereignis nicht vorbekannt ist. Eine Überwachung und Auswertung der Geschwindigkeit des Fahrzeugs oder sonstiger Parameter vor dem Eintritt des Überlastereignisses, also der Explosion einer Mine erlaubt keine Abschätzung der Stärke einer Explosion. Deshalb ist bei einem Überlastereignis im Sinne der vorliegenden Erfindung vor dem Eintritt des Überlastereignisses keine exakte Planung des Verlaufs der Energieabsorption möglich.

Mit der WO 2011/141164 A1 ist ein Regelverfahren für einen Energieabsorber einer Lenksäule bekannt geworden, bei dem mit einem Sensor die Relativgeschwindigkeit der zueinander beweglichen Teile des Energieabsorbers ermittelt wird. Anschließend wird der Energieabsorber so gesteuert, dass die Verzögerung einen möglichst konstanten und möglichst niedrigen Wert annimmt, sodass am Ende des Verfahrweges der zueinander beweglichen Teile des Energieabsorbers die Relativgeschwindigkeit annähernd 0 ist. Des Weiteren wird in dieser Druckschrift auch auf den möglichen Einsatz eines solchen Energieabsorbers an Sicherheitsgurtvorrichtungen, an Minenschutzsitzen, in Stoßstangen, in Werkzeugmaschinen, an Fangvorrichtungen für landende Flugzeuge auf Flugzeugträgern und in Dämpfungssystemen für Hubschrauber sowie für Dämpfungssysteme in Schuhen hingewiesen. Ein solches Verfahren, bei der Energieabsorber so gesteuert wird, dass die Relativbewegung am Ende des Verfahrweges der zueinander beweglichen Teile des Energieabsorbers auf 0 abgebremst ist, kann nur durchgeführt werden, wenn die Randparameter vorbekannt sind. Fährt ein Fahrzeug auf einer Straße auf ein davor fahrendes Auto auf, so ist die Relativgeschwindigkeit direkt bekannt und es kann der vollständige Hub optimal genutzt werden, um die Relativbewegung gezielt abzubremsen. Das gilt auch für Fangvorrichtungen bei der Landung eines Flugzeugs auf einem Flugzeugträger und selbst beim Absturz eines Hubschraubers, bei dem die Fallhöhe und die Fallgeschwindigkeit vorbekannt sind.

In allen Anwendungen wird jeweils der maximale Verfahrweg optimal ausgenutzt, um eine möglichst geringe Belastung z. B. beim Crash eines Autos zu ermöglichen, sodass der Fahrer beim Aufprall auf die Lenksäule möglichst geringen Belastungen ausgesetzt wird. Ein solches System funktioniert gut bei der Regelung des Energieabsorbers an Lenksäulen oder bei anderen Anwendungen, bei denen die auftretenden Geschwindigkeiten und somit Belastungen bekannt sind und dementsprechend der verfügbare Verfahrweg mit der vorhandenen Relativgeschwindigkeit korreliert werden kann.

Bei der Anwendung bei z. B. Minenschutzsitzen, bei denen bei einem Überlastereignis, wie einer Minenexplosion unter einem gepanzerten Fahrzeug, es nicht bekannt ist, welche Stärke die Explosion hat, führt eine solche Regelung zu den gewünschten Ergebnissen, wenn eine geeignete Explosion vorliegt. Die auftretenden Kräfte können gedämpft an den Körper einer auf dem Minenschutzsitz sitzenden Person weitergegeben werden. Die Belastung kann erheblich verringert werden. Die Verzögerung bzw. die Relativgeschwindigkeit wird dabei so eingestellt, dass über dem Verfahrweg eine konstante niedrige Belastung vorliegt.

Dies Verfahren setzt voraus, dass die Anfangsbedingungen und die Randbedingungen bekannt sind. Bei äußeren Einflüssen, deren Stärke und Dauer zunächst unbekannt sind, kann die Anwendung zu entsprechend unerwarteten Ergebnissen führen, sodass zu wenig oder zu stark gedämpft wird.

Es ist deshalb die Aufgabe der vorliegenden Erfindung, ein Verfahren und eine Baugruppe zum Dämpfen zur Verfügung zu stellen, womit eine bessere Steuerung bei Überlastereignissen möglich ist, bei denen bei Eintritt des Überlastereignisses nicht alle zur optimalen Steuerung benötigten Daten vorhanden sind.

Diese Aufgabe wird gelöst durch ein Verfahren mit den Merkmalen des Anspruchs 1 und durch eine Baugruppe mit den Merkmalen des Anspruchs 19. Bevorzugte Weiterbildungen der Erfindung sind in den Unteransprüchen angegeben. Weitere Vorteile und Merkmale ergeben sich aus der allgemeinen Beschreibung und aus der Beschreibung der Ausführungsbeispiele.

Ein erfindungsgemäßes Verfahren dient zur Steuerung eines Energieabsorbers an einer Beladungseinheit wenigstens bei einem Überlastereignis, um Belastungen auf ein auf einer Beladungseinheit transportiertes Objekt zu reduzieren. Der Energieabsorber wirkt dabei zwischen einer Aufnahmeeinheit zur Aufnahme von zu transportierenden Objekten und einer Trägereinrichtung zur Verbindung mit einem Transportmittel wie beispielsweise einem Fahrzeug oder dergleichen. Eine Absorberkraft des Energieabsorbers ist über eine elektrisch steuerbare Magnetfeldeinheit beeinflussbar.

Der Energieabsorber ist insbesondere geeignet, bei einem einmaligen Überlastereignis mit einem derart hohen Energieeintrag, bei dem ohne Energieabsorber ein Schaden an einem auf der Beladungseinheit zu transportierenden Objekt überwiegend wahrscheinlich wäre, Energie zu absorbieren, um durch die Energieabsorption des Energieabsorbers bei dem Überlastereignis eine resultierende Belastung auf das transportierende Objekt zu reduzieren.

Bei dem erfindungsgemäßen Verfahren sind die im Folgenden wiedergegebenen Schritte in insbesondere dieser oder auch einer anderen sinnvollen Reihenfolge vorgesehen:
- Es werden insbesondere mit einer Sensoreinrichtung nacheinander Messwerte über eine Belastung der Beladungseinheit erfasst. Dabei können die Messwerte direkt eine Belastung der Beladungseinheit wiedergeben. Die Messwerte können aber auch an dem Transportmittel oder an einem Objekt aufgenommen werden und sind insofern charakteristisch für eine Belastung der Beladungseinheit oder eines Objekts.
- Es wird ein Überlastereignis ermittelt oder erkannt, wenn ein aus den Messwerten abgeleitetes Maß einen vorbestimmten Schwellwert übersteigt.
- Nach Eintritt eines Überlastereignisses wird aus einer Mehrzahl von im Wesentlichen ab dem Eintritt des Überlastereignisses erfassten Messwerten ein prognostizierter Belastungsverlauf (für eine zukünftige Belastung) der Beladungseinheit abgeschätzt.
- Es wird (anschließend) ein geplanter Stromflussverlauf für die Magnetfeldeinheit ermittelt, durch den der prognostizierte Belastungsverlauf zeitabhängig so gedämpft wird, dass sich ein geplanter Belastungsverlauf ergibt, der unterhalb eines vorgegebenen Lastgrenze verbleibt. Insbesondere kann dadurch ein Schadensfall, in welchem ein Schaden an den Objekten zu befürchten bzw. zu erwarten ist, vermieden werden.
- Der Stromfluss durch die Magnetfeldeinheit wird nach dem geplanten Stromflussverlauf zeitabhängig gesteuert.

Das erfindungsgemäße Verfahren hat viele Vorteile. Das Verfahren erlaubt eine geeignete Steuerung des Energieabsorbers bei einem Überlastereignis, wobei nicht alle Randbedingungen und Ausgangsbedingungen zuvor bekannt sein müssen. So wird aus den nach Eintritt des Überlastereignisses erfassten Messwerten ein prognostizierter Belastungsverlauf (zukünftiger Belastungsverlauf) abgeleitet, der anhand der vorliegenden Messwerte wahrscheinlich ist. Eine solche Abschätzung bzw. Prognose eines zukünftigen Belastungsverlaufs kann beispielsweise auch durch Erfahrungswerte unterstützt werden. So kann aus dem Verlauf der während des Überlastereignisses vorausgegangenen Messwerte mit hoher Wahrscheinlichkeit auf den zukünftigen Verlauf des Überlastereignisses geschlossen werden.

In Abhängigkeit von dem prognostizierten Belastungsverlauf wird die Magnetfeldeinheit so gesteuert, dass die Belastung eines transportierten Objekts reduziert und ein Schadensfall mit hoher Wahrscheinlichkeit ausgeschlossen wird. Dabei kann ein Schadensrisiko von einem gewissen Ausmaß von z. B. 1 % oder 5 % oder 10 % oder gegebenenfalls auch mehr in Kauf genommen werden.

Bei dem Verfahren wird der bei dem Überlastereignis einwirkende Impuls bzw. dessen Energie absorbiert oder umgewandelt, um durch die Energieabsorption bzw. Dissipation von Energie bzw. Energieumwandlung des Energieabsorbers bei dem Überlastereignis eine resultierende Belastung auf ein bzw. das zu schützende Objekt zu reduzieren und einen Schaden an dem zu schützenden Objekt zu vermeiden.

Der geplante Stromflussverlauf wird anhand des prognostizierten Belastungsverlaufs ermittelt. Das bedeutet, dass der geplante Stromflussverlauf zeitabhängig berechnet werden kann oder aber es wird ein zeitabhängiger Stromflussverlauf anhand charakteristischer Werte aus einem Speicher entnommen. Dabei kann eine Art Kurvenauswahl erfolgen, die in einem Speicher hinterlegt sind.

In allen Fällen wird unter einem "Verlauf" (Belastungsverlauf, Stromflussverlauf etc.) ein zeitlicher und zeitabhängiger Verlauf der entsprechenden Größe verstanden.

Das Verfahren dient dazu, Objekte zu transportieren, wobei jeweils ein einzelnes Objekt gleichzeitig transportiert werden kann. Es ist auch möglich, dass mehrere oder eine Vielzahl von Objekten gleichzeitig transportiert werden. Jedenfalls können mehrere Objekte nacheinander transportiert werden.

Bei dem Verfahren ist es möglich, dass die Belastungseinheit bzw. der Energieabsorber der Beladungseinheit mehrere Magnetfeldeinheiten umfasst, wobei bei jeder Magnetfeldeinheit eine oder mehrere elektrische Spulen vorgesehen sein können.

Der prognostizierte Belastungsverlauf kann im Sinne der vorliegenden Erfindung in einfachen Fällen interpretiert werden als der auf der ungedämpften Seite der Baugruppe anliegende Belastungsverlauf. Dieser würde sich bei einem korrekt prognostizierten Belastungsverlauf etwa auf der ungedämpften Seite der Baugruppe ergeben. Der zugehörige geplante Belastungsverlauf wird in diesem Sinne dann interpretiert als der auf der gedämpften Seite der Baugruppe anliegende Belastungsverlauf. Der tatsächliche Belastungsverlauf wird durch die Wirkung des Energieabsorbers beeinflusst.

Unter einem prognostizierten Belastungsverlauf wird ein für die Zukunft abgeschätzter passiver Belastungsverlauf verstanden, der ohne Steuerung der Magnetfeldeinheit voraussichtlich vorliegen würde. Ein prognostizierter Belastungsverlauf wird bei dem Überlastereignis zunächst ermittelt oder abgeschätzt. Dabei kann dieser prognostizierte und passive Belastungsverlauf ohne Steuerung des Stromflusses ermittelt werden. Es ist auch möglich, dass der prognostizierte Belastungsverlauf stromlos ermittelt wird. Das bedeutet, dass nicht nur eine Veränderung der Steuerung des Stromflusses erfolgt, sondern für den prognostizierten Belastungsverlauf ein stromloser Zustand des Energieabsorbers angenommen wird. Möglich ist es auch, dass der prognostizierte Belastungsverlauf ohne ein Einwirken des Magnetfeldes ermittelt wird. Beispielsweise können Dauermagneten vorgesehen sein, die ein bestimmtes Magnetfeld an der Magnetfeldeinheit zur Verfügung stellen.

Der Energieabsorber wirkt in allen Fällen als Einrichtung zur Dissipation von Energie und insbesondere zur Umwandlung kinetischer Energie in Wärme. Insbesondere wird eine Reduktion des Energieeintrags bewirkt. Der Energieabsorber kann als Dämpfereinrichtung und insbesondere als Einmal-Dämpfereinrichtung wirken, um bei einmaligen (extremen) Überlastfällen Schaden von dem Objekt abzuhalten. Der Energieabsorber ist vorzugsweise sowohl mit der Aufnahmeeinheit als auch mit der Trägereinrichtung verbunden. Sowohl die Aufnahmeeinheit als auch die Trägereinheit sind Bestandteil der Beladungseinheit. Der Energieabsorber erlaubt eine Relativbewegung zwischen der Aufnahmeeinheit und der Trägereinrichtung wenigstens bei einem Überlastereignis. Der Energieabsorber ist vorzugsweise an einer Baugruppe vorgesehen, welche zusammen mit der Aufnahmeeinheit und der Trägereinrichtung die Belastungseinheit bildet.

Unter einem Schaden an einem Objekt im Sinne der vorliegenden Anmeldung wird ein Zustand verstanden, in welchem das Objekt wenigstens vorübergehend in einer als nachteilig bewerteten nicht wünschenswerten Weise verändert wird oder ist. Ein solcher Schaden kann ein vorübergehender Schaden sein. Möglich ist aber auch ein bleibender oder sogar irreparabler Schaden, der zu einer dauerhaften Beeinträchtigung oder zu einem Totalverlust führt.

Werden Personen als Objekte transportiert, so ist bei einer Person ein Schaden eine gesundheitliche Beeinträchtigung der Person. Ein bleibender Schaden bedeutet bei Personen wenigstens eine längerfristige und deutliche Beeinträchtigung des Wohlbefindens. Möglich ist es auch, dass ein Schaden zu einer dauerhaften gesundheitlichen Beeinträchtigung oder sogar zum Tod der Person führt.

Vorzugsweise wird der geplante Stromflussverlauf so ermittelt, dass ein DRI-Wert bei dem geplanten Belastungsverlauf ein vorbestimmtes Maß nicht überschreitet.

Ein Schaden an einem Gegenstand oder einem Gerät als Objekt kann vorübergehend sein, sodass beispielsweise die Funktion des Gerätes für einen bestimmten oder unbestimmten Zeitraum eingeschränkt ist oder gar nicht zur Verfügung steht. Ein solcher Schaden ist insbesondere aber länger andauernd und kann auch ein bleibender Defekt sein oder einen solchen auslösen. Beispielsweise kann ein Bruch eines Bauteils oder ein Mikrodefekt auf einer Platine oder aber auch nur eine Dejustage des Gerätes erfolgen, sodass das Gerät nur nach einer aufwändigen und gegebenenfalls nur in einem Labor möglichen Neujustage wiederverwendbar ist.

In allen Fällen ist ein Schadensfall dann zu erwarten, wenn eine Wahrscheinlichkeit für einen Schaden ein bestimmtes Maß übersteigt. Insbesondere wird ein Schaden dann zu erwarten sein, wenn die Wahrscheinlichkeit z. B. 1 %, 5 %, 10 % oder sogar 25 % übersteigt.

In einer bevorzugten Weiterbildung wird ein Schadensfall prognostiziert, wenn innerhalb des prognostizierten Zeitraumes eine prognostizierte auf ein Objekt und/oder eine Aufnahmeeinheit einwirkende Belastung eine vorbestimmte Größe übersteigt. Die vorbestimmte Größe der Belastung kann abhängig von der Art des transportierten Objekts sein. Beispielsweise kann die Belastung abhängig davon sein, ob eine Person und welche Person transportiert wird. Die vorbestimmte Größe der Belastung ist auch abhängig davon, ob ein Tier, ein Gerät und welches Gerät transportiert wird. Wenn keinerlei Auskünfte oder Informationen über die Art des transportierten Objekts vorliegen, kann ein standardisiertes Objekt zugrunde gelegt werden und damit praktisch die Belastung auf die Beladungseinheit zur Grundlage genommen werden.

Bei der Entscheidung bzw. Ermittlung, ob ein Schadensfall prognostiziert wird, wird insbesondere eine Höhe und/oder Länge einer einwirkenden Belastung berücksichtigt. Bei der Bestimmung oder Berechnung einer Belastung wird insbesondere eine einwirkende Beschleunigung und/oder einwirkende Kraft berücksichtigt. Eine Beschleunigung kann direkt über einen Beschleunigungssensor erfasst werden. Es ist auch möglich, dass ein Wegsensor oder mehrere Wegsensoren verwendet werden, die in festen oder variablen Zeitintervallen abgefragt werden. Aus den erfassten Daten können Beschleunigungswerte berechnet werden. Möglich ist auch der Einsatz von Kraftsensoren oder von Gewichtssensoren, die beispielsweise das Gewicht eines transportierten Objekts ermitteln. Über die Erfassung des Gewichts kann das Gewicht des Objekts berücksichtigt werden, sodass beispielsweise bei einem großen und schweren Mann eine andere Dämpfung zugrunde gelegt wird als bei einer relativ kleinen und leichten Frau.

In allen Ausgestaltungen ist es besonders bevorzugt, dass der prognostizierte Belastungsverlauf aus einer Mehrzahl von Messwerten abgeschätzt wird, die wenigstens im Wesentlichen ab dem Eintritt des Überlastereignisses erfasst werden. In allen Fällen ist es möglich, dass ergänzend auch Messwerte vor dem Eintritt des Überlastereignisses der Prognose zugrunde gelegt werden können. Vorzugsweise werden aber mehrere oder es wird eine Vielzahl von vorangegangenen Messwerten während des Überlastereignisses verwendet, um die Genauigkeit und Aussagekraft einer Prognose zu verbessern. Wird beispielsweise ein Drucksensor an dem Boden eines gepanzerten Truppentransporters als Transportmittel eingesetzt und detoniert eine Mine unterhalb des Truppentransporters, so wird der Luftdruck am Boden des Transportmittels sehr schnell und sehr stark ansteigen. Zu einem bestimmten Zeitpunkt, wenn schon ein hoher Druck auf den Fahrzeugboden einwirkt, wird ein auf einer Beladungseinheit sitzender Soldat noch keine Auswirkung der Explosion spüren. Durch die Steilheit des Druckanstiegs und durch den zeitlichen Verlauf und die absolute Höhe des schon erreichten Luftdrucks kann eine vernünftige Prognose abgegeben werden, wie sich die Auswirkungen der Explosion auf den Truppentransporter insgesamt und auf eine Beladungseinheit weiter auswirken. Dabei wird in diesem Fall der Vorteil genutzt, dass der am Fahrzeugboden angeordnete Luftdrucksensor die Belastungen der Explosion früher detektiert, als es im Fahrzeuginneren weiter oben festgestellt werden kann. Das Überlastereignis hat dabei aber schon begonnen und die Messwerte sind nach dem Start des Überlastereignisses gemessen worden.

Es ist auch möglich, wenigstens einen Messwert oder mehrere oder eine Vielzahl von vorangegangenen Messwerten zu Beginn oder auch vor dem Beginn des Überlastereignisses zu verwenden, beispielsweise für das Gewicht einer Person oder eines sonstigen Objekts.

In allen Fällen wird der geplante Stromflussverlauf so ermittelt, dass der prognostizierte Belastungsverlauf zeitabhängig so gedämpft wird, dass innerhalb des geplanten Belastungsverlaufs eine vorgegebene Lastgrenze nicht überschritten wird und insbesondere möglichst kein Schadensfall auftritt. Das bedeutet, dass der geplante Stromflussverlauf eine derartige Dämpfung bewirkt, dass der prognostizierte Belastungsverlauf zu jedem Zeitpunkt so gedämpft wird, dass die voraussichtlich vorliegende Belastung unterhalb der zulässigen Grenzbelastung (Lastgrenze) liegt. Mit dem geplanten Stromflussverlauf ergibt sich ein geplanter Belastungsverlauf, der zeitabhängig durch den geplanten Stromflussverlauf erreicht wird. Dabei wird neben dem Einfluss der Magnetfeldeinheit auch die Grunddämpfung des Energieabsorbers berücksichtigt.

Beispielsweise kann ein Grundfeld durch einen Dauermagneten erzeugt werden. Außerdem wird der Energieabsorber vorzugsweise mit einem magnetorheologischen Absorberfluid betrieben, bei dem aus einer ersten Kammer einer Absorberkammer Absorberfluid durch ein Ventil in eine zweite Kammer übertritt. Dabei liegt ein hydraulischer Strömungswiderstand vor, der zu der Grunddämpfung des Energieabsorbers beiträgt.

Es wird auch bei einem Überlastereignis weiter gemessen. Mit den aktuellen Messwerten wird vorzugsweise jeweils eine aktuelle Belastung ermittelt und es wird der aktuelle Stromfluss so angepasst, dass der geplante Belastungsverlauf erreicht wird. Die Überprüfung der aktuellen Belastung mit aktuellen Messwerten kann bei jedem neuen Messwert erfolgen. Es ist auch möglich, dass die aktuelle Belastung in vorbestimmten oder wählbaren Zeitabständen neu ermittelt wird. Möglich ist es auch, dass die Zeitspanne zwischen zwei neu Ermittlungen abhängig von der letzten aktuellen Belastung ist, um bei höheren Belastungen eine höhere Zeitauflösung zu ermöglichen.

Wird eine aktuelle Belastung ermittelt, die von dem geplanten Belastungsverlauf abweicht, so wird der aktuelle Stromfluss entsprechend erhöht oder verringert, sodass der geplante Belastungsverlauf erreicht wird.

In allen Ausgestaltungen ist es möglich, dass ein Überlastereignis ermittelt bzw. detektiert wird, wenn wenigstens ein Messwert einen vorbestimmten Wert übersteigt. Möglich und bevorzugt ist es aber auch, dass aus den Messwerten ein Prognosekennwert ermittelt wird und dass ein Überlastereignis erkannt wird, wenn der Prognosekennwert einen vorbestimmten Kennwert übersteigt. Das ist beispielsweise dann der Fall, wenn mehrere aufeinander folgende Messwerte ausgewertet werden und aus den Messwerten ermittelt wird, dass beispielsweise ein linearer oder quadratischer oder exponentieller Anstieg der Messwerte vorliegt. Dann ist es sehr wahrscheinlich, dass sich wenigstens für einen gewissen Zeitraum ein entsprechender Anstieg der Messwerte fortsetzt, sodass ein Prognosekennwert ermittelt werden kann, der die voraussichtliche, zukünftige Entwicklung der Messwerte berücksichtigt.

Ein solches Verfahren ist besonders vorteilhaft, da die hohen und gegebenenfalls gefährlichen Messwerte nicht erst erreicht werden müssen, sondern es wird zuvor schon abgeschätzt, wie sich die Situation entwickelt und es kann entsprechend reagiert werden.

In bevorzugten Weiterbildungen umfasst die Magnetfeldeinheit wenigstens einen Dauermagnet. Der Dauermagnet erzeugt ein magnetisches Grundfeld, welches durch das Magnetfeld einer elektrischen Spule der Magnetfeldeinheit moduliert wird. Dadurch kann dauerhaft eine bestimmte Grunddämpfung zur Verfügung gestellt werden, ohne dass elektrischer Strom zur Dämpfung benötigt wird. Wird eine höhere Dämpfung gefordert, kann mit dem Magnetfeld einer elektrischen Spule das wirkende Magnetfeld verstärkt werden. Wird eine kleinere Dämpfung benötigt, kann das magnetische Grundfeld des Dauermagneten entsprechend geschwächt werden. Die oder wenigstens eine elektrische Spule (Elektrospule) ist vorzugsweise so dimensioniert, dass diese nur für die Dauer eines Überlastereignisses (Ereignis) von z. B. 100ms Dauer funktioniert. Dadurch können die elektrische Spule, die Stromzuführdrähte und andere Bauteile dünner, leichter und kostengünstiger ausgeführt werden. Dadurch wird die Baugruppe bzw. der Aktuator wirtschaftlicher umsetzbar. Bei einer längeren Bestromung würde die elektrische Spule überlastet werden und könnte durchbrennen.

Vorzugsweise werden nach Erkennen eines Überlastereignisses periodisch Messwerte aufgenommen. Daraus wird periodisch ein aktueller prognostizierter Belastungsverlauf für eine zukünftige Belastung der Beladungseinheit abgeschätzt. Das bedeutet, dass eine Prognose nicht nur einmal zu Beginn erstellt werden kann, sondern dass laufend, auch während des Verfahrens, neue Prognosen erstellt werden, um den Verfahrensablauf an die aktuelle Entwicklung anzupassen. Dabei werden für den aktuellen prognostizierten Belastungsverlauf wieder passive Voraussetzungen angenommen, sodass zu der dann aktuell gemessenen Belastung die aktuelle Dämpfung hinzugerechnet wird, um die eine in einem passiven Grundzustand vorliegende aktuelle passive Belastung zu erhalten.

Vorteilhafterweise wird mit dem aktuellen prognostizierten Belastungsverlauf periodisch ein aktueller geplanter Stromflussverlauf ermittelt. Damit wird der aktuell geplante Stromflussverlauf an den aktuell prognostizierten Belastungsverlauf angepasst.

In entsprechender Weise wird dann vorzugsweise mit dem aktuell prognostizierten Belastungsverlauf ermittelt, ob ein Schadensfall prognostiziert wird, in welchem an den auf der Beladungseinheit transportierten Objekten ein Schaden zu erwarten ist. Wird dabei ermittelt, dass voraussichtlich kein Schadensfall mehr auftritt, kann das Verfahren entsprechend fortgesetzt werden. Wird ermittelt, dass ein Schadensfall auftreten kann, wird dem entsprechend entgegengesteuert.

Vorzugsweise wird ein aktuell geplanter Belastungsverlauf ermittelt und es wird der dazugehörige aktuell geplante Stromflussverlauf abgeleitet, wobei der prognostizierte Belastungsverlauf zeitabhängig so gedämpft wird, dass im geplanten Belastungsverlauf möglichst kein Schadensfall mehr auftritt.

In allen Ausgestaltungen können Messwerte von 2 oder mehr Sensoren erfasst werden. Beispielsweise können Luftdrucksensoren am Boden oder an einer anderen Stelle des Transportmittels vorgesehen sein. Es ist auch möglich, dass Beschleunigungssensoren am Boden des Transportmittels oder aber an der Beladungseinheit oder an der Trägereinrichtung oder der Aufnahmeeinheit der Beladungseinheit vorgesehen sind. Möglich ist es auch, dass Sensoren an den Objekten vorgesehen sind. Es ist dann bevorzugt, dass Daten von zwei oder mehr Sensoren auch unterschiedlicher Art Berücksichtigung finden.

In vorteilhaften Ausgestaltungen werden Messwerte über eine Belastung der Beladungseinheit, der Trägereinrichtung, des Transportmittels, der wirkenden Beschleunigung, der wirkenden Kraft oder des Luftdrucks ermittelt. Insbesondere werden dabei vertikale Beschleunigungswerte berücksichtigt.

Der bei dem Verfahren eingesetzte Energieabsorber an der Beladungseinheit weist vorzugsweise eine wenigstens teilweise mit einem magnetorheologischen Fluid gefüllte Absorberkammer und wenigstens eine elektrische Spule auf, die die Magnetfeldeinheit insgesamt oder einen wesentlichen Teil der Magnetfeldeinheit bildet. Über den Stromfluss durch die elektrische Spule wird die Absorbereinheit entsprechend gesteuert.

Eine erfindungsgemäße Beladungseinheit umfasst eine Aufnahmeeinheit zur Aufnahme von zu transportierenden Objekten und eine Trägereinrichtung zur Verbindung mit einem Transportmittel und wenigstens einen Energieabsorber, welcher zwischen der Beladungseinheit und der Trägereinrichtung angeordnet ist. Der Energieabsorber ist zum Dämpfen von bei einem Überlastereignis einwirkenden Belastungen vorgesehen.

Der Energieabsorber ist insbesondere geeignet und eingerichtet, bei einem einmaligen Überlastereignis mit einem derart hohen Energieeintrag, bei dem ohne Energieabsorber ein Schaden an einem auf der Beladungseinheit zu transportierenden Objekt überwiegend wahrscheinlich wäre, Energie zu absorbieren, um durch die Energieabsorption des Energieabsorbers bei dem Überlastereignis eine resultierende Belastung auf das zu transportierende Objekt zu reduzieren.

Eine Absorberkraft des Energieabsorbers ist über wenigstens eine elektrisch steuerbare Magnetfeldeinheit beeinflussbar. Es ist eine Steuereinrichtung vorgesehen, wobei wenigstens eine Sensoreinrichtung zur Erfassung von Messwerten für eine Belastung der Beladungseinheit vorgesehen ist. Die Steuereinrichtung ist dazu eingerichtet und ausgebildet, ein Überlastereignis zu ermitteln, wenn ein aus den Messwerten abgeleitetes Maß einen vorbestimmten Schwellwert übersteigt.

Die Steuereinrichtung ist dazu eingerichtet und ausgebildet, nach Eintritt eines Überlastereignisses aus einer Mehrzahl von im Wesentlichen ab dem Eintritt des Überlastereignisses erfassten Messwerten einen prognostizierten Belastungsverlauf der Beladungseinheit abzuschätzen. Die Steuereinrichtung ist dazu eingerichtet und ausgebildet, einen geplanten Stromflussverlauf für die Magnetfeldeinheit zu ermitteln, bei dem der prognostizierte Belastungsverlauf zeitabhängig so gedämpft wird, dass sich ein geplanter Belastungsverlauf ergibt, der unterhalb eines vorgegebenen Grenzwerts verbleibt. Die Steuereinrichtung ist dazu eingerichtet und ausgebildet ist, den Stromfluss durch die Magnetfeldeinheit nach dem geplanten Stromflussverlauf zeitabhängig zu steuern.

Der Absorber ist für eine einmalige Belastung ausgelegt. Bei einer Explosion oder dergleichen dissipiert bzw. absorbiert der Absorber Energie, um die Belastung auf ein Objekt zu verringern.

Es ist möglich, dass an der Beladungseinheit eine Schereinrichtung vorgesehen ist, die abgeschert wird, wenn die auf die Beladungseinheit einwirkende Belastung ein vorbestimmtes Maß überschreitet. Es ist möglich, dass die Steuereinrichtung ein Überlastereignis erkennt, wenn ein Schersensor der Schereinrichtung ein Abscheren der Schereinrichtung detektiert.

In allen Fällen ist es bevorzugt, dass eine zulässige Grenzbelastung für eine Standardperson vorgegeben wird. Es können auch Sensorwerte einer an einer Person angeordneten Sensoreinheit berücksichtigt werden.

Es ist möglich, dass eine Komfortfunktion integriert ist, bei der kleinere Stöße unterhalb eines Überlastereignisses gedämpft werden.

In allen Fällen ist es möglich, die Bewertung des Verletzungsrisikos einer Wirbelsäule einer Person als Objekt abzuschätzen, indem der Dynamic Response Index (DRI) abgeleitet wird, der vertikale Schocks z. B. bei Schleudersitzen anhand anhand der Beschleunigung bewertet. Eine Formel zur Berechnung des DRI gemäß NATO-Standard findet sich auf Wikipedia (http://en.wikipedia.org/wiki/Dynamic response index). Demnach besteht bei einem DRI von 17,7 eine Wahrscheinlichkeit von 10 % für eine schwere Verletzung.

Möglich ist auch die Regelung auf die Wirbelsäulenkraft und dort insbesondere die Kraft im unteren Wirbelsäulenbereich (lumbar spine) über eine andere, dieser Kraft entsprechende Größe.

Da die Wirbelsäulenkraft nicht direkt gemessen werden kann, soll von anderen Größen auf diese geschlossen werden. Möglich ist z. B. die Messung von Kraft / Druck / Drehmoment an einem Minenschutzsitz oder an dem Sitzgestell oder einem Auflagekissen des Minenschutzsitzes. Denkbar ist z. B. der Einsatz einer Sensormatte ähnlich jenen, die Druck / Kraft örtlich auflösen.

Denkbar ist es auch, die Stromvorgabe nur zu steuern: dafür kann (über einen längeren Zeitraum) das Insassengewicht ermittelt und es können entsprechende Kennlinien vorberechnet werden. Die passende Kennlinie wird dann z. B. anhand von Beschleunigungssensoren ausgewählt.

Durch die Erfindung ist es auch möglich auf Explosionen zu reagieren, die stärker als erwartet sind. Das Verfahren wird an die aktuellen Bedingungen angepasst, sodass der Verfahrweg bestmöglich genutzt wird.

In allen Fällen ist die Beladungseinheit insbesondere als Sitzeinrichtung von einem Fahrzeug oder Kraftfahrzeug ausgebildet. Die Sitzeinrichtung umfasst eine als Sitz ausgebildete Aufnahmeeinheit und eine als Sitzrahmen ausgebildete Trägereinrichtung. Dabei ist der Energieabsorber zwischen dem Sitz und dem Sitzrahmen angebracht.

Vorzugweise wird im Sinne der vorliegenden Erfindung ein einmaliges Überlastereignis als Explosion einer Mine angesehen. Insbesondere können im Sinne der vorliegenden Erfindung auch andere einmalige Überlastereignisse mit einem Energieeintrag angesehen werden, bei denen insbesondere aus vorangegangenen Messwerten eine Impulsstärke und Impulsdauer nicht abgeschätzt werden kann. Ein solches einmaliges Überlastereignis tritt z. B. auch bei einem Run-Off-Road-Unfall eines Fahrzeuges auf, wenn der Fahrer zum Beispiel die Kontrolle verliert und das Fahrzeug unvorhergesehen und unvorhersehbar z. B. eine Böschung oder dergleichen abstürzt und tiefer auf dem Gelände hart aufprallt. Bei derartigen Unfällen ist die Stärke des Energieeintrags bei dem Überlastereignis nicht aus der Geschwindigkeit des Fahrzeugs ableitbar, sondern hängt von der Fallhöhe ab, die aber nicht aus z. B. der Geschwindigkeit des Fahrzeugs abgeleitet werden kann. Deshalb ist es mit der vorliegenden Erfindung auch möglich und bevorzugt die Insassen von Kraftfahrzeugen bei sogenannten "Run OFF-Road" Unfällen, auf welche z. B. in den USA ca. 50% der Verkehrstoten zurückgehen, zu schützen bzw. Belastungen zu reduzieren.

Ein Abkommen von Straßenfahrzeugen wie Autos, SUVs, LKWs usw. von der asphaltierten Straße aufgrund von Ablenkung, Müdigkeit und schlechten Witterungsbedingungen in unebenes Gelände tritt besonders häufig auf. Fahrzeuge mit einer Baugruppe nach dieser Erfindung verfügen vorzugsweise über eine Sitzkonstruktion mit einem Sitz und einem Sitzrahmen, bei der der zuvor beschriebene Energieabsorber die insbesondere vertikale bzw. im Wesentlichen vertikal wirkende Aufschlagenergie weitgehend absorbiert. Zur Vorbeugung von gefährlichen Wirbelsäulenverletzungen von Insassen befindet sich deshalb zwischen dem Sitz und dem Sitzrahmen wenigstens ein Energieabsorber, um die vertikalen Kräfte und/oder um die Kräfte parallel zur Sitzrückenlehne und/oder um die Kräfte rechtwinklig zur Sitzfläche abzufedern. Solche Kräfte entstehen bei einem harten (wenigstens teilweise vertikalen) Aufprall des Fahrzeugs abseits der Fahrbahn. Bei derartigen Überlastereignissen wirkt die zu absorbierende Aufschlagenergie zu einem erheblichen Teil oder weitgehend oder nahezu vollständig in vertikaler Richtung.

Die Erfindung ist primär nicht dafür vorgesehen, bei einem Frontalzusammenstoß Energie zu absorbieren. Für Frontalzusammenstöße in der Ebene sind bei Kraftfahrzeugen hingegen Knautschzonen oder Airbags des Fahrzeugs vorgesehen.

Die Höhe von vertikal wirkenden Belastungen bei Überlastereignissen und Unfällen beim Abkommen von der Straße oder die Stärke der vertikalen Belastungen bei Minenexplosionen können hingegen nicht aus Parametern vor dem Überlastereignis abgeleitet werden, da sie nicht nicht geschätzt oder gemessen werden können.

In allen Fällen kann der Energieabsorber vertikal, horizontal oder auch schräg eingebaut sein.

Beim Stand der Technik erkennt bei Kraftfahrzeugen hingegen ein Sensor, ob das Fahrzeug von der Fahrbahn abkommt und aktiviert entsprechende Sicherheitssysteme, wie den Gurtstraffer. Die Unfallschwere und eine daraus resultierende optimale Belastungsreduktion kann hieraus aber nicht abgeleitet werden. Wichtig ist, was nach dem Abkommen von der Fahrbahn mit dem Fahrzeug passiert, wo und wie landet es bzw. mit welcher Art von Untergrund es Kontakt hat und in welcher Raumlage sich das Fahrzeug beim Aufprall befindet. Bei dem erfindergemäßen Verfahren wird auf diesen relevanten Aufprall/Impuls wie zuvor und nachfolgend beschrieben reagiert, was eine wesentliche Optimierung bzw. Verletzungsreduktion gegenüber dem Stand der Technik zur Folge hat.

In allen Weiterbildungen, Ausführungen und Ausführungsbeispielen kann das auf einer Beladungseinheit transportierte Objekt mittelbar oder unmittelbar auf der Beladungseinheit befestigt und/oder damit gekoppelt und/oder darauf angeordnet sein. Es kann eine feste und/oder lösbare Verbindung sein. Oder das Objekt wird auf der Beladungseinheit platziert und durch Gewichtskraft und/oder seitliche Begrenzungen gehalten.

Weitere Vorteile und Eigenschaften der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: eine schematische perspektivische Ansicht einer erfindungsgemäßen Baugruppe;
- Fig. 2: einen Vorderansicht der Baugruppe nach Fig. 1;
- Fig. 3: eine Seitenansicht im Schnitt der Baugruppe nach Fig. 1 im Dämpfungszustand;
- Fig. 4: einen Vorderansicht der Baugruppe nach Fig. 1 im Schnitt im Ruhezustand;
- Fig. 5: ein Fahrzeug mit erfindungsgemäßen Baugruppen zum Schutz der Insassen bei Explosionen;
- Fig. 6: zeitliche Verläufe einer Belastung und der Stromflüsse bei einem Überlastereignis; und

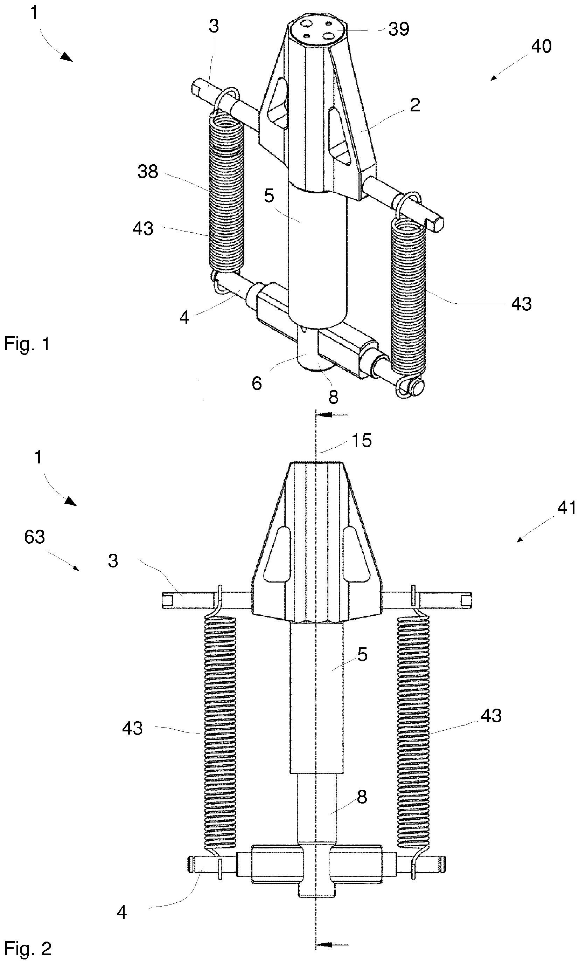

In Fig. 1 ist eine schematische perspektivische Ansicht einer erfindungsgemäßen Baugruppe 1 dargestellt. Die Baugruppe umfasst einen Absorberzylinder an dessen einem Ende eine Befestigungseinrichtung 3 und an dessen anderem Ende eine Halteeinrichtung 4 vorgesehen sind. Die Halteeinrichtung 4 und die Befestigungseinrichtung 3 weisen hier jeweils zwei seitlich abstehende Arme auf, an denen jeweils eine Vorspannfeder 43 einer Vorspanneinrichtung 38 angeordnet ist, um die Baugruppe 1 nach einem Störfall 63 wieder in den Ruhezustand 40 zu überführen, der auch in Figur 1 dargestellt ist.

Die Baugruppe 1 dient zur Energieabsorption bzw. zur Dämpfung von Relativbewegungen zwischen der Befestigungseinrichtung 3 und der Halteeinrichtung 4. Die Halteeinrichtung 4 ist dazu mit der Kolbeneinrichtung 6 des Energieabsorbers 2 verbunden, während die Befestigungseinrichtung 3 fest mit dem Absorberzylinder 5 verbunden ist. Am oberen Ende ist hier ein Abschlussdeckel 39 zu sehen, der die hier im Inneren verborgene zweite Kammer der Absorberkammer 9 nach außen hin abschließt und begrenzt.

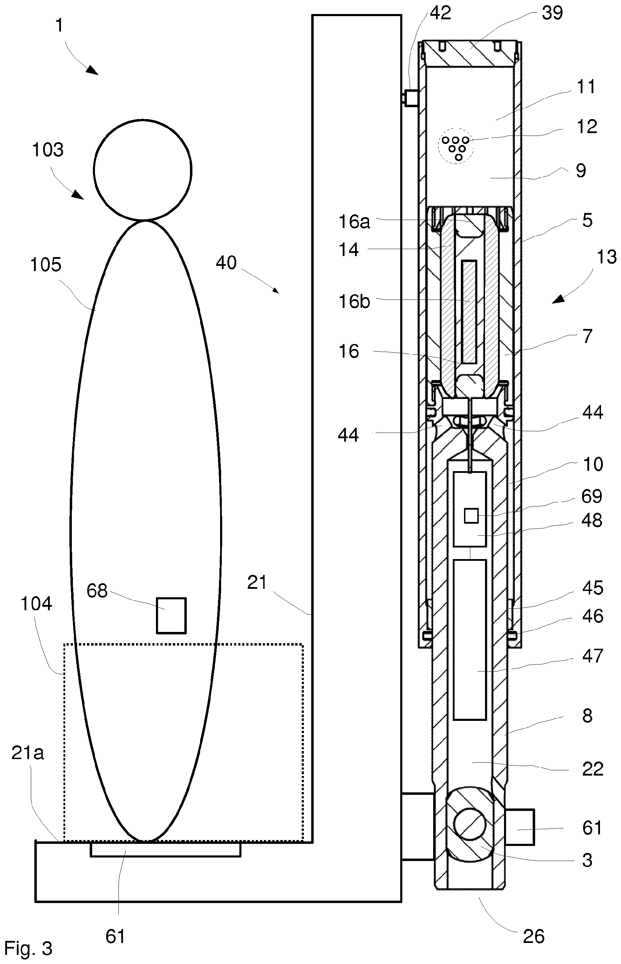

Figur 2 zeigt die Baugruppe 1 in einer Vorderansicht. Durch den Absorberzylinder 5 erstreckt sich zentral eine Symmetrieachse 15, durch welche der Schnitt nach Figur 3 verläuft.

Figur 3 zeigt den Schnitt nach Figur 2 in einem Dämpfungszustand 41. Zusätzlich eingezeichnet ist schematisch eine Sitzeinrichtung 21 mit einer Sitzfläche 21a, auf der sich eine Person wie beispielsweise ein Soldat in einem Truppentransporter setzen kann.

Im Inneren des Absorberzylinders 5 ist im Schnitt der Absorberkolben 7 und die damit verbundene Kolbenstange 8 der Kolbeneinrichtung 6 erkennbar. Der Absorberkolben 7 teilt die im Inneren des Absorberzylinders 5 vorhandene Absorberkammer 9 in eine erste Kammer 10 und eine zweite Kammer 11. Die zweite Kammer 11 wird nach außen durch den Abschlussdeckel 39 begrenzt und hier luftdicht abgeschlossen.

Im Ruhezustand ist die erste Kammer 10 wenigstens teileweise und insbesondere vollständig mit Absorberfluid 12 gefüllt. Bei Eintreten eines Störfalls 63 wird die Kolbenstange 8 aus dem Absorberzylinder 5 herausgezogen, sodass das in der ersten Kammer 10 vorhandene Absorberfluid 12 durch den Absorberkanal 14 in dem Absorberkolben 7 durchtritt und in die zweite Kammer 11 übertritt. Die zweite Kammer 11 kann im Ruhezustand schon zu einem gewissen Teil mit dem Absorberfluid 12 gefüllt sein. Es kann aber auch sein, dass die zweite Kammer 11 im Ruhezustand nur wenig oder gar nicht mit Absorberfluid 12 gefüllt ist, sondern nur mit Luft oder einem anderen kompressiblen Gas oder Medium.

Klar erkennbar ist, dass die Kolbenstange 8 einen sehr großen Durchmesser aufweist, sodass für die erste Kammer 10 nur ein relativ schmaler Ringspalt um die Kolbenstange herum verbleibt. Dadurch wird beim Ausfahren des Absorberkolbens 7 nur ein relativ geringes Volumen des Absorberfluids 12 aus der ersten Kammer 10 verdrängt. Deshalb sind die Strömungsgeschwindigkeiten des Absorberfluids 12 in dem Absorberkanal 14 auch bei durch Explosionen hervorgerufenen Störfällen 63 gering, sodass die Länge des Absorberkolbens 7 ausreicht, um durch das Magnetfeld der elektrischen Spule als Felderzeugungseinrichtung 16 die Strömung wie gewünscht zu beeinflussen.

Bei der Überleitung des Strömungsfluids 12 von der ersten Kammer 10 in die zweite Kammer 11 wird das Absorberfluid 12 durch die sich von außen radial schräg nach innen erstreckenden radialen Strömungsöffnungen 44 nach innen hin umgeleitet. Das bedeutet, dass der Strömungskanal bzw. der Absorberkanal 14 radial weiter innen angeordnet ist als die erste Kammer 10. Dadurch kann das Innere des Absorberkolbens 7 effektiv zur Erzeugung des nötigen Magnetfeldes und für den Absorberkanal 14 verwendet werden.

Die Kolbenstange 8 ist hier erheblich dicker ausgeführt, als es für die Stabilität nötig wäre. Deshalb ist in der Kolbenstange 8 ein Hohlraum 22 vorgesehen, der hier als Sackloch ausgeführt ist. Das Sackloch 22 erstreckt sich von dem dem Kolben gegenüberliegenden Ende 26 aus in die Kolbenstange 8 hinein. Der Hohlraum 22 kann sich bis kurz vor den Absorberkolben 7 hin erstrecken, sodass sich die Länge des Hohlraums 22 über dreiviertel oder mehr der Länge der Kolbenstange 8 bis hin zum Absorberkolben 7 erstreckt. Der Hohlraum 22 kann entsprechend genutzt werden. Hier sind im Inneren des Hohlraums 22 die Steuereinrichtung 48 und ein Energiespeicher 47 angeordnet. Die Steuereinrichtung 48 ist mit der elektrischen Spule 16 verbunden, um diese zu steuern. Des Weiteren ist die Steuereinrichtung 48 mit einer Sensoreinrichtung 61 verbunden, um die Belastungen der Sitzeinrichtung 21 aufzunehmen und zu verarbeiten. Neben der Sensoreinrichtung 61 können auch noch weitere Sensoreinheiten 68 vorgesehen sein.

Durch den Energiespeicher 47 wird sichergestellt, dass auch bei einem Stromausfall an Bord des Transportmittels jederzeit die Baugruppe 1 die genügende Energie zur Steuerung des Energieabsorbers 2 bereithält. Der Energiespeicher kann ein Kondensator oder ein Akku sein.

Der Absorberkolben 7 trennt hier nicht nur die erste Kammer 10 von der zweiten Kammer 11, sondern bildet auch ein Strömungsventil 13, welches durch die Steuereinrichtung 48 steuerbar ist.

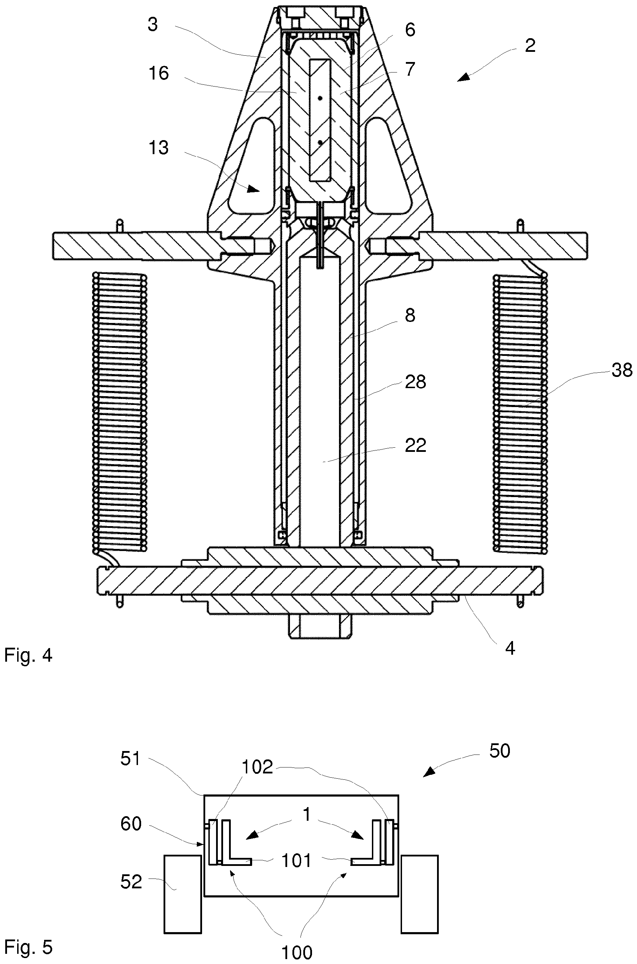

In Figur 4 ist ein weiterer Querschnitt durch die Baugruppe 1 dargestellt, wobei hier auch die Vorspanneinrichtung 38 als Rückstelleinrichtung 43 im Schnitt dargestellt ist. Der Übersichtlichkeit halber wurden der Energiespeicher 47 und die Steuereinrichtung 48 in dem Hohlraum 22 hier nicht dargestellt. Die erste Kammer 10 bildet einen Ringraum 28 um die Kolbenstange 8 herum. Dabei ist eine radiale Erstreckung des Ringraums 28 kleiner als eine Wandstärke der hohlen Kolbenstange 8.

Figur 5 zeigt eine schematische Darstellung eines Transportmittels 50 wie eines Truppentransporters, an dem erfindungsgemäße Baugruppen 1 zum Schutz der Insassen bei Explosionen vorgesehen sind. Das Transportmittel 50 weist eine Karosserie 51 auf, an der Minenschutzsitze 60 als Baugruppen 1 befestigt sind. Das Fahrzeug 50 ist über Räder mit Reifen 52 fahrbar. In einem Störfall 63, wie beispielsweise einer Explosion wird das Fahrzeug 50 in die Luft geschleudert, wobei eine gedämpfte Bewegung der Sitzeinrichtung 21 der Baugruppen 1 erfolgt, um die darauf sitzenden Personen vor bleibenden Schäden zu bewahren.

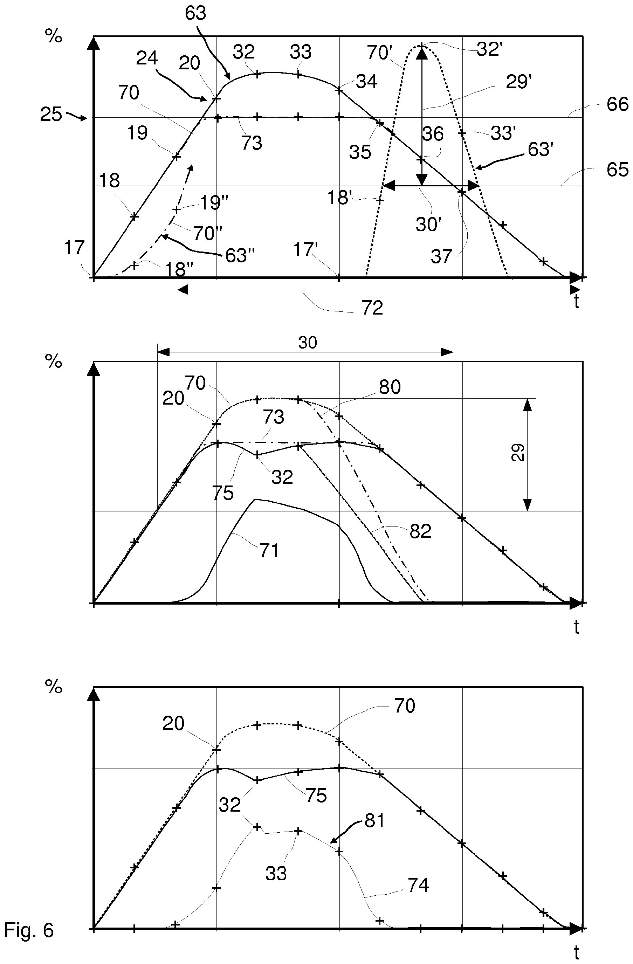

Figur 6 zeigt übereinander drei schematische Diagramme eines vereinfacht dargestellten Überlastereignisses 63, wobei in dem ersten Diagramm oben ein prognostizierter Belastungsverlauf 70 über der Zeit dargestellt ist. Zusätzlich ist noch ein davon unabhängiger zweiter prognostizierter Belastungsverlauf eines anderen Überlastereignisses 63' gestrichelt dargestellt und es ist der Beginn eines dritten Überlastereignisses 63" abgebildet.

Das mittlere Diagramm von Figur 6 zeigt nochmals den prognostizierten Belastungsverlauf 70 (das ist etwa eine Prognose für den Belastungsverlauf auf der ungedämpften Seite der Baugruppe 1) und den zugehörigen geplanten Belastungsverlauf 73 (das ist etwa der Belastungsverlauf auf der gedämpften Seite der Baugruppe 1) sowie den zugehörigen geplanten Stromflussverlauf 71.

Das untere Diagramm von Figur 6 zeigt auf derselben Zeitskala wiederum den prognostizierten Belastungsverlauf 70 sowie den tatsächlichen Belastungsverlauf 75 und den tatsächlichen Stromflussverlauf 74 über der Zeit.

Bei den schematisch dargestellten Überlastfällen 63, 63' und 63" werden beispielsweise periodisch in kleinen zeitlichen Abständen von einer Millisekunde, 10 Millisekunden oder sonstigen sinnvollen Zeitabständen Messwerte 17 bis 20 etc. aufgenommen.

Zum Zeitpunkt 0 wird ein erster Messwert 17 aufgenommen, bei dem die Belastung der Beladungseinheit 100 gleich 0 ist. Der nächste Messwert 18 weist eine erhebliche höhere Belastung auf, wobei der Messwert 18 noch unterhalb des Schwellwertes 65 verbleibt, ab dem ein Überlastereignis 63 erkannt wird. Der dritte Messwert 19 liegt oberhalb des Schwellwertes 65, sodass auf ein Überlastereignis 63 geschlossen wird. Im Anschluss daran wird ein prognostizierter Belastungsverlauf 70 berechnet, der hier unter Hinzuziehung der Messwerte 17, 18 und 19 ermittelt wird. Dabei kann eine Hochrechnung über eine lineare Fortschreibung der bisher erfassten Messwerte erfolgen. Jedenfalls werden die nach Erkennung des Überlastereignisses 63 erfassten Messwerte hinzugezogen.

Es ist aber auch möglich, dass in einer Speichereinrichtung 69 nach bekannten Kurvenverläufen für derartige Überlastfälle gesucht wird und ein entsprechend geeigneter Belastungsverlauf als prognostizierter Belastungsverlauf 70 angenommen wird.

Mit Abschluss dieses Schrittes steht ein prognostizierter Belastungsverlauf 70 fest, der im oberen Diagramm nach Figur 6 aufgetragen ist. Wie direkt erkennbar ist, überschreitet der prognostizierte Belastungsverlauf 70 sowohl den vorbestimmten Kennwert 25 als auch die hier identische Lastgrenze 66 für auf der Aufnahmeeinheit 101 der Beladungseinheit 100 transportierte Objekte 103. Der prognostizierte Zeitraum 72 erstreckt sich hier von dem Zeitpunkt zum Messwert 19 bis zum Ende (hier etwa 10 Zeiteinheiten später).

Insbesondere dient die Beladungseinheit 100 als Minenschutzsitz mit einer Sitzeinrichtung 21, auf deren Sitzfläche 21a ein Passagier 105 bzw. eine Person sitzend transportiert wird. Damit eignet sich die Beladungseinheit 100 zum Einsatz in Truppentransportern, Hubschraubern oder sonstigen Fahrzeugen.

Da der prognostizierte Belastungsverlauf 70 die Lastgrenze 66 überschreitet, ab der ein Schaden für ein transportiertes Objekt 103 zu erwarten oder zu befürchten ist, ergreift die Steuereinrichtung 48 Gegenmaßnahmen, um den geplanten Belastungsverlauf 73 zu erreichen. Dazu wird die Bewegung der Aufnahmeeinheit 101 entsprechend gedämpft. Um das gewünschte Ergebnis und somit den geplanten Belastungsverlauf 73 zu erreichen, wird der Energieabsorber 2 entsprechend gedämpft. Dazu wird die Magnetfeldeinheit 16 und insbesondere die elektrische Spule 16a mit einem solchen Stromfluss beaufschlagt, dass sich der geplante Belastungsverlauf 73 ergibt, der die Lastgrenze 66 nicht überschreitet.

Es ist möglich, dass ein prognostizierter Belastungsverlauf 70 erst dann ermittelt oder berechnet wird, wenn beispielsweise eine Schereinrichtung 42 bzw. der Scherbolzen einer Schereinrichtung 42 abgeschert wird und dieses als Startsignal für die Steuerungsvorgänge genommen wird. Möglich ist es aber auch, dass ständig Messwerte 17 bis 20 etc. aufgenommen werden und ständig prognostizierte Belastungsverläufe errechnet werden, um jederzeit auf ein Überlastereignis 63 vorbereitet zu sein.

Möglich und bevorzugt ist es auch, dass ständig oder unter gewissen Voraussetzungen Prognose-Kennwerte 24 ermittelt werden, bei denen beispielsweise aus den letzten zwei oder drei oder mehr Messwerten 17, 18 und 19 ein Prognose-Kennwert 24 für den nächsten Messwert 20 bestimmt wird. Überschreitet der Prognose-Kennwert 24 ein vorbestimmtes Maß 65 oder 66, so wird das Überlastereignis 63 ausgelöst und es wird ein entsprechender prognostizierter Belastungsverlauf 70 ermittelt.

Bei der Ermittlung des Belastungsverlaufes und der Gefährlichkeit einer solchen Belastung wird insbesondere nicht nur die Höhe einer wirkenden Kraft oder wirkenden Beschleunigung berücksichtigt, sondern es wird neben der Höhe 29 einer Belastung auch die Länge 30 einer Belastung berücksichtigt. Es hat sich herausgestellt, dass kurzzeitige hohe Belastungen besser verkraftet werden können, als etwas schwächere, aber dafür längere Belastungen, wenigstens, wenn die Belastungen eine gewisse Höhe erreichen, aber noch unterhalb bestimmter Grenzwerte liegen.

In allen Fällen ist es besonders bevorzugt, dass der auf ein Objekt 103 einwirkende Impuls zur Grundlage der einwirkenden Belastung genommen wird. Daneben können auch noch weitere Messwerte Berücksichtigung finden.

Bei den in dem oberen Diagramm von Figur 6 dargestellten prognostizierten Belastungsvorläufen 70, 70' und 70" unterscheidet sich die Höhe der jeweiligen Belastung und auch die Länge 30 der jeweiligen Belastung. So weist das Überlastereignis 63' eine erheblich kürzere Länge 30' und dabei eine höhere Amplitude 29' auf als die entsprechenden Werte bei dem Überlastereignis 63.

Das mittlere Diagramm von Figur 6 zeigt neben dem ursprünglich bei Erkennung des Überlastereignisses 63 prognostizierten Belastungsverlaufs 70 auch den geplanten Belastungsverlauf 73 an, der die Lastgrenze 66 nicht überschreitet. Weiterhin ist durchgezogen der tatsächliche Belastungsverlauf 75 aufgetragen, der sich durch die Regelung im Betrieb ergibt. Schließlich ist in dem mittleren Diagramm von Figur 6 der geplante Stromflussverlauf 71 dargestellt, der sich ergibt, wenn der prognostizierte Belastungsverlauf 70 so gedämpft wird, dass sich der geplante Belastungsverlauf 73 ergibt. Zu Beginn wird kein Strom ausgegeben. Nach Erkennung des Überlastereignisses 63 wird der Stromfluss so erhöht, dass der geplante Belastungsverlauf 73 jeweils unterhalb der Lastgrenze 66 verbleibt.

In Betrieb kann es dazu kommen, dass der tatsächliche Belastungsverlauf 75 von dem geplanten Belastungsverlauf 73 abweicht. Dies ist hier durch den Messpunkt 32 erkennbar, der deutlich unterhalb des geplanten Belastungswertes liegt. Die Regelung wird nun gegensteuern und einen vom geplanten Stromflussverlauf 71 abweichenden Stromfluss zu der Magnetfeldeinheit 16 ausgeben, sodass der geplante Belastungsverlauf 73 wieder angenähert oder erreicht wird.

Beim Ablauf des Überlastereignisses 63 kann es vorkommen, dass der tatsächliche Belastungsverlauf 75 von dem prognostizierten Belastungsverlauf 70 abweicht. Insbesondere ist es auch möglich, dass der ursprünglich prognostizierte Belastungsverlauf 70 mehr oder weniger weit von der Realität abweicht. Bei dem Verfahren ist es nun vorzugsweise vorgesehen, dass auch während der Abarbeitung der Verfahrensschritte jeweils geprüft wird, ob sich aufgrund der letzten Messwerte (z. B. 32, 33 oder 34 bis 37) eine Änderung der Prognose über den Belastungsverlauf ergibt. Dementsprechend kann ein neuer und aktuell prognostizierter Belastungsverlauf 80 ermittelt werden, der mehr oder weniger von dem ursprünglich prognostizierten Belastungsverlauf 70 abweicht. Dementsprechend wird der aktuell geplante Belastungsverlauf 82 angepasst, der sich wiederum ebenfalls deutlich von dem ursprünglich geplanten Belastungsverlauf 73 unterscheiden kann.

Im unteren Diagramm von Figur 6 ist neben dem ursprünglich prognostizierten Belastungsverlauf 70 auch der tatsächliche Belastungsverlauf 75 dargestellt. Weiterhin ist der aktuell geplante bzw. tatsächlich realisierte Stromflussverlauf 81 aufgetragen. Da zum Zeitpunkt des Messwertes 32 die tatsächliche Belastung kleiner ist als die geplante Belastung, wird nachfolgend der aktuelle Stromfluss 74 reduziert, sodass der tatsächliche Belastungsverlauf 75 sich wieder dem geplanten Belastungsverlauf 73 annähert. Wie ein Vergleich der Kurvenverläufe des ursprünglich geplanten Stromflussverlaufes 71 und des tatsächlichen Stromflussverlaufes 81 ergibt, können entsprechende Abweichungen von dem Kurvenverlauf zu unterschiedlichen Zeitpunkten vorliegen. Die Regelung steuert hier immer wieder den geplanten Belastungsverlauf 73 bzw. 81 an. Dabei kann der geplante Belastungsverlauf von Zeit zu Zeit oder regelmäßig aktualisiert werden.

In dieser Anmeldung sind in allen Weiterbildungen und Ausgestaltungen die Begriffe "prognostizierter Belastungsverlauf", "geplanter Belastungsverlauf", "geplanter Stromflussverlauf", "geplanter Belastungsverlauf", "tatsächlicher Belastungsverlauf", "aktuell prognostizierter Belastungsverlauf", "aktuell geplanter Stromflussverlauf" und "aktuell geplanter Belastungsverlauf" definierte und feststehende Begriffe, die jeweils Kurvenverläufe definieren und von einander zu unterscheiden sind. Ebenso sind die Begriffe "prognostizierter Zeitraum" und "aktueller Stromfluss" eindeutige Begriffsbestimmungen.

**Bezugszeichenliste:**

| | | | |
|---|---|---|---|
| 1 | Baugruppe | 46 | Dichtung |
| 2 | Energieabsorber | 47 | Energiespeicher |
| 3 | Befestigungseinrichtung | 48 | Steuereinrichtung |
| 4 | Halteeinrichtung | 50 | Transportmittel |
| 5 | Absorberzylinder | 51 | Karosserie |
| 6 | Kolbeneinrichtung | 52 | Reifen |
| 7 | Absorberkolben | 60 | Minenschutzsitz |
| 8 | Kolbenstange | 61 | Sensoreinrichtung |
| 9 | Absorberkammer | 62 | Messwert |
| 10 | erste Kammer | 63 | Überlastfall |
| 11 | zweite Kammer | 65 | Schwellwert |
| 12 | Absorberfluid | 66 | Lastgrenze |
| 13 | Absorberventil | 68 | Sensoreinheit |
| 14 | Absorberkanal | 69 | Speicher |
| 15 | Symmetrieachse | 70 | prognostizierter Belastungsverlauf |
| 16 | Magnetfeldeinheit | | |
| 16a | elektrische Spule | 71 | geplanter Stromflussverlauf |
| 16b | Dauermagnet | | |
| 17-20 | Messwert | 72 | prognostizierter Zeitraum |
| 21 | Sitzeinrichtung | | |
| 21a | Sitzfläche | 73 | geplanter Belastungsverlauf |
| 22 | Hohlraum (in 8) | | |
| 24 | Prognose-Kennwert | 74 | aktueller Stromfluss |
| 25 | vorbestimmter Kennwert | 75 | tatsächlicher Belastungsverlauf |
| 26 | Ende | | |
| 28 | Ringraum | 80 | aktuell prognostizierter Belastungsverlauf |
| 29 | Höhe | | |
| 30 | Länge | 81 | aktuell geplanter Stromflussverlauf |
| 32-37 | Messwert | | |
| 38 | Vorspanneinrichtung | 82 | aktuell geplanter Belastungsverlauf |
| 39 | Abschlussdeckel | | |
| 40 | Ruhezustand | 100 | Beladungseinheit |
| 41 | Dämpfungszustand | 101 | Aufnahmeeinheit |
| 42 | Schereinrichtung | 102 | Trägereinrichtung |
| 43 | Vorspannfeder | 103 | Objekt |
| 44 | radiale Strömungsöffnung | 104 | Gerät |
| | | 105 | Passagier |

## Patentansprüche

1. Verfahren zur Steuerung eines Energieabsorbers (2) an einer Beladungseinheit (100) wenigstens bei einem Überlastereignis (63), um Belastungen auf ein auf einer Beladungseinheit (100) transportiertes Objekt (103) zu reduzieren,
wobei der Energieabsorber (2) geeignet ist, bei einem einmaligen Überlastereignis mit einem derart hohen Energieeintrag, bei dem ohne Energieabsorber ein Schaden an einem bei einem Transport auf der Beladungseinheit (100) zu schützenden Objekt überwiegend wahrscheinlich wäre, Energie zu absorbieren, um durch die Energieabsorption des Energieabsorbers (2) bei dem Überlastereignis eine resultierende Belastung auf das Objekt zu reduzieren,
wobei der Energieabsorber (2) zwischen einer Aufnahmeeinheit (101) zur Aufnahme von zu transportierenden Objekten (103) und einer Trägereinrichtung (102) zur Verbindung mit einem Transportmittel (50) wirkt, wobei eine Absorberkraft des Energieabsorbers (2) über eine elektrisch steuerbare Magnetfeldeinheit (16) beeinflussbar ist, wobei die folgenden Schritte in dieser oder einer anderen sinnvollen Reihenfolge vorgesehen sind:
- mit einer Sensoreinrichtung (61) werden nacheinander Messwerte (17-20) über eine Belastung (80) der Beladungseinheit (100) erfasst;
- es wird ein Überlastereignis (63) ermittelt, wenn ein aus den Messwerten (17-20) abgeleitetes Maß (24) einen vorbestimmten Schwellwert (65) übersteigt;
- nach Eintritt eines Überlastereignisses (63) wird aus einer Mehrzahl von von im Wesentlichen ab dem Eintritt des Überlastereignisses erfassten Messwerten (19-20) ein prognostizierter Belastungsverlauf (70) der Beladungseinheit (100) abgeschätzt;
- es wird ein geplanter Stromflussverlauf (71) für die Magnetfeldeinheit (16) ermittelt, durch den der prognostizierte Belastungsverlauf (70) zeitabhängig so gedämpft wird, dass sich ein geplanter Belastungsverlauf ergibt, der unterhalb eines vorgegebenen Lastgrenze (66) verbleibt;
- der Stromfluss durch die Magnetfeldeinheit (16) wird nach dem geplanten Stromflussverlauf (71) zeitabhängig gesteuert.

2. Verfahren nach Anspruch 1, wobei der geplante Stromflussverlauf (71) so ermittelt wird, dass ein DRI-Wert bei dem geplanten Belastungsverlauf ein vorbestimmtes Maß nicht überschreitet.

3. Verfahren nach einem der vorhergehenden Ansprüche, wobei ein Gewicht eines Objekts (103) berücksichtigt wird.

4. Verfahren nach einem der vorhergehenden Ansprüche, wobei der geplante Stromflussverlauf (71) so ermittelt wird, dass der prognostizierte Belastungsverlauf (70) zeitabhängig so gedämpft wird, dass der geplante Belastungsverlauf (73) die Lastgrenze (66) nicht überschreitet.

5. Verfahren nach einem der vorhergehenden Ansprüche, wobei mit aktuellen Messwerten (33-37) eine aktuelle Belastung (74) ermittelt wird und der aktuelle Stromfluss (74) so angepasst wird, dass der geplante Belastungsverlauf (73) erreicht wird.

6. Verfahren nach einem der vorhergehenden Ansprüche, wobei ein Überlastereignis (63) ermittelt wird, wenn wenigstens ein Messwert (17-20) einen vorbestimmten Schwellwert (65) übersteigt und/oder wobei aus den Messwerten ein Prognose-Kennwert (24) ermittelt wird, und wobei ein Überlastereignis (63) erkannt wird, wenn der Prognose-Kennwert (24) einen vorbestimmten Kennwert (25) übersteigt.

7. Verfahren nach einem der vorhergehenden Ansprüche, wobei nach Erkennen eines Überlastereignisses (63) periodisch Messwerte (33-37) aufgenommen werden und daraus periodisch ein aktueller prognostizierter Belastungsverlauf (80) für eine zukünftige Belastung der Beladungseinheit (100) abgeschätzt wird.

8. Verfahren nach dem vorhergehenden Anspruch, wobei mit dem aktuellen prognostizierten Belastungsverlauf (80) periodisch ein aktueller geplanter Stromflussverlauf (81) ermittelt wird.

9. Verfahren nach dem vorhergehenden Anspruch, wobei ermittelt wird, ob bei dem aktuellen prognostizierten Belastungsverlauf (80) ein Schadensfall prognostiziert wird, in welchem an den auf der Beladungseinheit (100) transportierten Objekten (103) ein Schaden zu erwarten ist und/oder wobei der aktuelle geplante Stromflussverlauf (71) periodisch so ermittelt wird, dass der aktuell prognostizierte Belastungsverlauf zeitabhängig so gedämpft wird, dass der aktuell geplante Belastungsverlauf erreicht oder angenähert wird.

10. Verfahren nach einem der vorhergehenden Ansprüche, wobei Messwerte (33-37) von zwei oder mehr Sensoren (61, 68) erfasst werden und/oder wobei Messwerte (33-37) über eine Belastung der Beladungseinheit (100), der Trägereinrichtung (101), des Transportmittels (50), der Beschleunigung und/oder des Luftdrucks ermittelt werden.

11. Verfahren nach einem der vorhergehenden Ansprüche, wobei die Steuereinrichtung (48) ein Überlastereignis (63) erkennt, wenn ein Schersensor ein Abscheren der Schereinrichtung (42) detektiert.

12. Verfahren nach einem der vorhergehenden Ansprüche, wobei die zulässige Grenzbelastung für eine Standardperson vorgegeben wird.

13. Verfahren nach einem der vorhergehenden Ansprüche, wobei Sensorwerte einer an einer Person angeordneten Sensoreinheit (68) berücksichtigt werden und/oder wobei mit der Beladungseinheit (100) ein Sensormittel (61) gekoppelt ist, mit dem ein Gewicht einer transportierten Person und/oder eine Beschleunigung der Beladungseinheit (100) ermittelbar ist.

14. Verfahren nach einem der vorhergehenden Ansprüche, wobei der Energieabsorber (2) über ein Absorberventil (13) verfügt, dessen Dämpfung über eine Stärke eines angelegten Magnetfeldes gesteuert wird.

15. Beladungseinheit (100) mit einer Aufnahmeeinheit (101) zur Aufnahme von zu transportierenden Objekten (103) und einer Trägereinrichtung (102) zur Verbindung mit einem Transportmittel (50) und mit einem Energieabsorber (2), welche zwischen der Beladungseinheit und der Trägereinrichtung (102) angeordnet ist, und wobei der Energieabsorber (2) zum Dämpfen von bei einem Überlastereignis einwirkenden Belastungen vorgesehen ist, wobei der Energieabsorber (2) geeignet und eingerichtet ist, bei einem einmaligen Überlastereignis mit einem derart hohen Energieeintrag, bei dem ohne Energieabsorber ein Schaden an einem auf der Beladungseinheit (100) zu transportierenden Objekt überwiegend wahrscheinlich wäre, Energie zu absorbieren, um durch die Energieabsorption des Energieabsorbers (2) bei dem Überlastereignis eine resultierende Belastung auf das zu transportierende Objekt zu reduzieren,
wobei eine Absorberkraft des Energieabsorbers (2) über eine elektrisch steuerbare Magnetfeldeinheit (16) beeinflussbar ist, und wobei eine Steuereinrichtung (48) vorgesehen ist, wobei eine Sensoreinrichtung (61) zur Erfassung von Messwerten (17-20) für eine Belastung der Beladungseinheit (80) vorgesehen ist, wobei die Steuereinrichtung dazu eingerichtet und ausgebildet ist, ein Überlastereignis (63) zu ermitteln, wenn ein aus den Messwerten (17-20) abgeleitetes Maß (24) einen vorbestimmten Schwellwert (65) übersteigt, **dadurch gekennzeichnet, dass** die Steuereinrichtung dazu eingerichtet und ausgebildet ist, nach Eintritt eines Überlastereignisses (63) aus einer Mehrzahl von im Wesentlichen ab dem Eintritt des Überlastereignisses erfassten Messwerten (19-20) einen prognostizierten Belastungsverlauf (70) der Beladungseinheit (100) abzuschätzen, und wobei die Steuereinrichtung dazu eingerichtet und ausgebildet ist, einen geplanten Stromflussverlauf (71) für die Magnetfeldeinheit (16) zu ermitteln, bei dem der prognostizierte Belastungsverlauf (70) zeitabhängig so gedämpft wird, dass sich ein geplanter Belastungsverlauf ergibt, der unterhalb eines vorgegebenen Grenzwerts verbleibt, und wobei die Steuereinrichtung dazu eingerichtet und ausgebildet ist, den Stromfluss durch die Magnetfeldeinheit (16) nach dem geplanten Stromflussverlauf (71) zeitabhängig zu steuern.

## Claims

1. Method for controlling an energy absorber (2) at a loading unit (100) at least in an overload event (63) to reduce loads acting on an object (103) transported on a loading unit (100), wherein the energy absorber (2) is suitable to absorb energy in a single overload event involving energy input that is so high that absent an energy absorber, damage to an object to be protected while being transported on the loading unit (100) is highly probable, so as to reduce loads on the object resulting from the overload event by way of energy absorption by means of the energy absorber (2), wherein the energy absorber (2) acts between a receiving unit (101) for receiving objects (103) for transporting and a carrier device (102) for connection with a transporter (50), wherein an absorber force of the energy absorber (2) can be influenced by an electrically controllable magnetic field unit (16) wherein the following steps are provided in this or another expedient sequence:
- measurement values (17-20) of loads (80) acting on the loading unit (100) are captured sequentially by means of a sensor device (61);
- an overload event (63) is determined if a measure (24) derived from the measurement values (17-20) exceeds a predetermined threshold value (65);
- after onset of an overload event (63) a prognosticated load curve (70) of the loading unit (100) is assessed from a plurality of measurement values (19-20) substantially captured from the onset of the overload event;
- a planned power flow curve (71) for the magnetic field unit (16) is determined by means of which the prognosticated load curve (70) is dampened time-dependent so that a planned load curve results which remains beneath a predetermined load limit (66) ;
- the power flow through the magnetic field unit (16) is controlled time-dependent according to the planned power flow curve (71).

2. The method according to claim 1 wherein the planned power flow curve (71) is determined so that a DRI value in the planned load curve does not exceed a predetermined level.

3. The method according to any of the preceding claims wherein the weight of an object (103) is taken into account.

4. The method according to any of the preceding claims wherein the planned power flow curve (71) is determined so that the prognosticated load curve (70) is dampened time-dependent so that the planned load curve (73) does not exceed the load limit (66) .

5. The method according to any of the preceding claims wherein current measurement values (33-37) are used to determine a current load (74) and the current power flow (74) is adapted so that the planned load curve (73) is achieved.

6. The method according to any of the preceding claims wherein an overload event (63) is determined if at least one measurement value (17-20) exceeds a predetermined threshold value (65) and/or wherein a characteristic prognosis value (24) is obtained from the measurement values, and wherein an overload event (63) is detected if the characteristic prognosis value (24) exceeds a predetermined characteristic value (25).

7. The method according to any of the preceding claims wherein after detecting an overload event (63), measurement values (33-37) are periodically captured from which a current prognosticated load curve (80) is assessed for a future load on the loading unit (100).

8. The method according to the preceding claim wherein a current, planned power flow curve (81) is periodically determined by way of the current prognosticated load curve (80).

9. The method according to the preceding claim wherein it is determined whether damage is prognosticated by way of the current prognosticated load curve (80) in which damage to the objects (103) transported on the loading unit (100) must be expected and/or wherein the currently planned power flow curve (71) is periodically determined so that the currently prognosticated load curve is dampened time-dependent so as to obtain or approximate the currently planned load curve.

10. The method according to any of the preceding claims wherein measurement values (33-37) are captured by two or more sensors (61, 68) and/or wherein measurement values (33-37) are obtained about a load on the loading unit (100), the carrier device (101), the transporter (50), the acceleration and/or the air pressure.

11. The method according to any of the preceding claims wherein the control device (48) detects an overload event (63) when a shearing sensor detects that the shearing device (42) shears off.

12. The method according to any of the preceding claims wherein the permissible limit load is specified for a standard person.

13. The method according to any of the preceding claims wherein sensor values from a sensor unit (68) disposed on a person are taken into account and/or wherein the loading unit (100) is coupled with a sensor means (61) with which the weight of a transported person and/or an acceleration of the loading unit (100) can be obtained.

14. The method according to any of the preceding claims wherein the energy absorber (2) is provided with an absorber valve (13) the damping of which is controlled by the strength of an applied magnetic field.

15. Loading unit (100) having a receiving unit (101) for receiving objects (103) for transporting and a carrier device (102) for connection with a transporter (50) and with an energy absorber (2) disposed between the loading unit and the carrier device (102), and wherein the energy absorber (2) is provided for damping the loads acting in an overload event, wherein the energy absorber (2) is suitable and set up to absorb energy in a single overload event involving energy input that is so high that absent an energy absorber damage to the object transported on the loading unit (100) is highly probable, so as to reduce resulting loads acting on the transported object in the overload event by way of energy absorption by means of the energy absorber (2),
wherein an absorber force of the energy absorber (2) can be influenced by means of an electrically controlled magnetic field unit (16), and wherein a control device (48) is provided, wherein a sensor device (61) is provided for capturing measurement values (17-20) for loads on the loading unit (80), wherein the control device is set up and configured to determine an overload event (63) when a measure (24) derived from the measurement values (17-20) exceeds a predetermined threshold value (65),
**characterized in that**
the control device is set up and configured to assess a prognosticated load curve (70) on the loading unit (100) after the onset of an overload event (63) from a plurality of measurement values (19-20) obtained substantially from the onset of the overload event, and wherein the control device is set up and configured to obtain a planned power flow curve (71) for the magnetic field unit (16) where the prognosticated load curve (70) is dampened time-dependent so that a planned load curve ensues which remains beneath a predetermined threshold value, and wherein the control device is set up and configured to control the power flow through the magnetic field unit (16) time-dependent according to the planned power flow curve (71).

## Revendications

1. Procédé de commande d'un absorbeur d'énergie (2) au niveau d'une unité de chargement (100) au moins lors d'un événement de surcharge (63) afin de réduire des charges sur un objet (103) transporté sur une unité de chargement (100),
dans lequel ledit absorbeur d'énergie (2) est apte à absorber de l'énergie dans le cas d'un événement unique de surcharge avec un apport d'énergie tellement important, dans le cas duquel un dommage sur un objet à protéger lors d'un transport sur l'unité de chargement (100) serait pour la plupart probable sans la présence d'un absorbeur d'énergie, afin de réduire par l'absorption d'énergie de l'absorbeur d'énergie (2) lors de l'événement de surcharge une charge résultante sur l'objet,
dans lequel l'absorbeur d'énergie (2) agit entre une unité de réception (101) destinée à recevoir des objets (103) à transporter et un dispositif de support (102) destiné à être relié à un moyen de transport (50), dans lequel une force d'absorbeur de l'absorbeur d'énergie (2) peut être influencée par une unité de champ magnétique (16) apte à être commandée électriquement, les étapes suivantes étant prévues dans cet ordre ou dans un autre ordre raisonnable:
- des valeurs de mesure (17-20) relatives à une charge (80) de l'unité de chargement (100) sont enregistrées successivement au moyen d'un dispositif à capteurs (61);
- un événement de surcharge (63) est déterminé lorsqu'une mesure (24) dérivée des valeurs de mesure (17-20) dépasse une valeur de seuil (65) prédéterminée;
- après que ledit événement de surcharge (63) s'est produit, une allure de charge pronostiquée (70) de l'unité de chargement (100) est estimée à partir d'une pluralité de valeurs de mesure (19-20) enregistrées pour l'essentiel dès que l'événement de surcharge se produit;
- on détermine une allure de flux de courant planifiée (71) pour l'unité de champ magnétique (16), par laquelle ladite allure de charge pronostiquée (70) est amortie en fonction du temps de telle sorte que l'on obtient une allure de charge planifiée qui reste en dessous d'une limite de charge (66) prédéterminée;
- le flux de courant à travers l'unité de champ magnétique (16) est commandé en fonction du temps selon l'allure de flux de courant planifiée (71).

2. Procédé selon la revendication 1, dans lequel l'allure de flux de courant planifiée (71) est déterminée de telle sorte que, dans ladite allure de charge planifiée, une valeur DRI ne dépasse pas une mesure prédéterminée.

3. Procédé selon l'une quelconque des revendications précédentes, dans lequel un poids d'un objet (103) est pris en considération.

4. Procédé selon l'une quelconque des revendications précédentes, dans lequel l'allure de flux de courant planifiée (71) est déterminée de telle sorte que l'allure de charge pronostiquée (70) est amortie en fonction du temps de telle manière que l'allure de charge planifiée (73) ne dépasse pas la limite de charge (66).

5. Procédé selon l'une quelconque des revendications précédentes, dans lequel une charge actuelle (74) est déterminée au moyen de valeurs de mesure (33-37) actuelles et le flux de courant actuel (74) est adapté de telle manière que l'allure de charge planifiée (73) est atteinte.

6. Procédé selon l'une quelconque des revendications précédentes, dans lequel un événement de surcharge (63) est déterminé lorsqu'au moins une valeur de mesure (17-20) dépasse une valeur de seuil (65) prédéterminée, et/ou dans lequel une valeur caractéristique de prévision (24) est déterminée à partir des valeurs de mesure, et dans lequel un événement de surcharge (63) est identifié lorsque ladite valeur caractéristique de prévision (24) dépasse une valeur caractéristique (25) prédéterminée.

7. Procédé selon l'une quelconque des revendications précédentes, dans lequel, après avoir identifié un événement de surcharge (63), des valeurs de mesure (33-37) sont enregistrées périodiquement et une allure de charge actuelle pronostiquée (80) pour une charge future de l'unité de chargement (100) est estimée périodiquement à partir de celles-ci.

8. Procédé selon la revendication précédente, dans lequel une allure de flux de courant planifiée actuelle (81) est déterminée périodiquement à partir de l'allure de charge pronostiquée actuelle (80).

9. Procédé selon la revendication précédente, dans lequel il est déterminé si, dans le cas de l'allure de charge pronostiquée actuelle (80), un cas de dommage est pronostiqué dans lequel il faut s'attendre à un dommage sur les objets (103) transportés sur ladite unité de chargement (100), et/ou dans lequel l'allure de flux de courant planifiée actuelle (71) est déterminée périodiquement de telle sorte que l'allure de charge pronostiquée actuellement est amortie en fonction du temps de telle manière que l'allure de charge planifiée actuellement est atteinte ou que l'on s'approche de celle-ci.

10. Procédé selon l'une quelconque des revendications précédentes, dans lequel des valeurs de mesure (33-37) sont enregistrées par deux ou plusieurs capteurs (61, 68), et/ou dans lequel on détermine des valeurs de mesure (33-37) relatives à une charge de l'unité de chargement (100), du dispositif de support (101), du moyen de transport (50), de l'accélération et/ou de la pression d'air.

11. Procédé selon l'une quelconque des revendications précédentes, dans lequel le dispositif de commande (48) identifie un événement de surcharge (63) lorsqu'un capteur de cisaillement détecte un cisaillement du dispositif de cisaillement (42).

12. Procédé selon l'une quelconque des revendications précédentes, dans lequel la charge limite admissible pour une personne standard est prédéterminée.

13. Procédé selon l'une quelconque des revendications précédentes, dans lequel des valeurs de capteur d'une unité à capteurs (68) disposée sur une personne sont prises en considération, et/ou dans lequel un moyen capteur (61) est couplé à l'unité de chargement (100), au moyen duquel on peut déterminer un poids d'une personne transportée et/ou une accélération de l'unité de chargement (100).

14. Procédé selon l'une quelconque des revendications précédentes, dans lequel l'absorbeur d'énergie (2) dispose d'une soupape d'absorbeur (13) dont l'amortissement est commandé par une intensité d'un champ magnétique appliqué.

15. Unité de chargement (100) comprenant une unité de réception (101) destinée à recevoir des objets (103) à transporter et un dispositif de support (102) destiné à être relié à un moyen de transport (50) ainsi qu'un absorbeur d'énergie (2) qui est disposé entre ladite unité de chargement (100) et ledit dispositif de support (102), et dans laquelle ledit absorbeur d'énergie (2) est prévu pour amortir des charges agissant dans le cas d'un événement de surcharge,
dans lequel ledit absorbeur d'énergie (2) est apte à et agencé pour absorber de l'énergie dans le cas d'un événement unique de surcharge avec un apport d'énergie tellement important, dans le cas duquel un dommage sur un objet à transporter sur l'unité de chargement (100) serait pour la plupart probable sans la présence d'un absorbeur d'énergie, afin de réduire par l'absorption d'énergie de l'absorbeur d'énergie (2) lors de l'événement de surcharge une charge résultante sur l'objet à transporter, dans laquelle une force d'absorbeur de l'absorbeur d'énergie (2) peut être influencée par une unité de champ magnétique (16) apte à être commandée électriquement, et dans laquelle un dispositif de commande (48) est prévu, dans laquelle un dispositif à capteurs (61) destiné à enregistrer des valeurs de mesure (17-20) pour une charge de l'unité de chargement (100) est prévu, dans laquelle ledit dispositif de commande est agencé et conçu pour déterminer un événement de surcharge (63) lorsqu'une mesure (24) dérivée des valeurs de mesure (17-20) dépasse une valeur de seuil (65) prédéterminée, **caractérisée par le fait que** ledit dispositif de commande est agencé et conçu pour estimer, après qu'un événement de surcharge (63) s'est produit, une allure de charge pronostiquée (70) de l'unité de chargement (100) à partir d'une pluralité de valeurs de mesure (19-20) enregistrées pour l'essentiel dès que l'événement de surcharge se produit, et dans laquelle ledit dispositif de commande est agencé et conçu pour déterminer une allure de flux de courant planifiée (71) pour l'unité de champ magnétique (16), dans laquelle ladite allure de charge pronostiquée (70) est amortie en fonction du temps de telle sorte que l'on obtient une allure de charge planifiée qui reste en dessous d'une valeur limite prédéterminée, et dans laquelle ledit dispositif de commande est agencé et conçu pour commander le flux de courant à travers l'unité de champ magnétique (16), en fonction du temps selon l'allure de flux de courant planifiée (71).
